(19) Europäisches Patentamt / European Patent Office / Office européen des brevets

(11) **EP 3 477 877 B1**

(12) **EUROPEAN PATENT SPECIFICATION**

(45) Date of publication and mention
of the grant of the patent:
**11.12.2019 Bulletin 2019/50**

(51) Int Cl.:
*H04B 10/61* ^(2013.01)

(21) Application number: **17306468.4**

(22) Date of filing: **25.10.2017**

(54) **DEVICE FOR CORRECTING THE PHASE SHIFT OF A TRANSMISSION CHANNEL**

VORRICHTUNG ZUR KORREKTUR DER PHASENVERSCHIEBUNG EINES ÜBERTRAGUNGSKANALS

DISPOSITIF POUR CORRIGER LE DÉCALAGE DE PHASE D'UN CANAL DE TRANSMISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.05.2019 Bulletin 2019/18**

(73) Proprietor: **Nokia Solutions and Networks Oy 02610 Espoo (FI)**

(72) Inventors:
• **RAMANTANIS, Petros**
  **91620 NOZAY (FR)**
• **BIGO, Sébastien**
  **91620 NOZAY (FR)**
• **ROSSI, Nicola**
  **91620 NOZAY (FR)**
• **LONARDI, Matteo**
  **37069 VERONA (IT)**
• **SERENA, Paolo**
  **29027 PODENZANO (PC) (IT)**
• **MUSETTI, Simone**
  **43125 PARMA (IT)**

(74) Representative: **Loyer & Abello 9, rue Anatole de la Forge 75017 Paris (FR)**

(56) References cited:
**EP-A1- 2 337 241     EP-A1- 2 856 669**

## Description

## Field of the invention

The invention relates to the technical field of transmission systems with some varying impairments, in particular to methods and devices for correcting a phase shift in a signal.

## Background

Carrier Phase Estimation (CPE) is essential for coherent reception in the context of modern transmission systems, for example optical ones, since, before making a symbol decision, the unknown signal phase shift due to propagation needs to be estimated and/or subtracted.

The aim of the CPE is to estimate the carrier phase as accurately as possible in order to cancel it from the input signal and to thereby isolate the phase of the transmitted data symbol. However, the phase shift comprises both non-linear (NL) effect induced phase noise, i.e. the phase noise induced by non-linear effects such as Self-Phase Modulation (SPM) and/or Cross-Phase Modulation (XPM) and phase noise of the laser used as the local oscillator.

In the absence of NL induced phase noise, e.g. if non-linear effects can be neglected, the carrier phase term is reduced to laser phase noise fluctuations. By contrast with data rates having an order of 100 Gb/s, laser phase noise varies with the order of some MHz. Therefore the laser phase noise fluctuations may typically be considered as constant over a large range of consecutive samples. In such cases, the carrier phase may be estimated using large equal tap-weight filters. In other words, if non-linear induced phase noise can be neglected, an increase of the filter length typically increases the performance of the carrier phase estimator.

However, when NL induced phase noise becomes dominant, for example when increasing an optical input power into an optical fiber, carrier phase fluctuations are much faster and are not correlated over a large range of samples anymore. In such cases, an increase of the length of the filter used for the estimation of the carrier phase does not increase the quality of the determined carrier phase estimate. As a matter of fact, it can be shown that an increase of the filter length actually decreases the quality of the carrier phase estimate.

EP2337241 discloses a method for selecting the length of the filter used for carrier phase estimation based on the degree of non-linear distortions incurred by an optical signal in an optical transmission channel. However, the method results in the selection of the length of the filter which is a trade-off between cancelling the phase shift and cancelling the NL induced phase noise.

Such a method is not totally satisfying as the made trade-off does not optimally mitigate both the laser phase noise and the NL induced phase noise.

EP2856669 discloses a method for processing a received optical signal having a carrier modulated according to a modulation scheme. First and second carrier phase estimation operations are performed on a digital signal derived from an optical carrier obtained from the received optical signal using coherent optical reception. The first carrier phase estimation operation tracks relatively fast phase variations of the optical carrier of the received optical signal to produce a first carrier phase estimation and the second carrier phase estimation operation tracks relatively slow phase variations of the optical carrier of the received optical signal to produce a second carrier phase estimation. A difference between the first and second carrier phase estimations is computed. Occurrence of a cycle slip is determined when the difference is greater than a threshold. A correction is applied to the first carrier phase estimation when the low pass filtered difference exceeds the threshold.

## Summary

In embodiments, the invention provides a method for correcting the phase shift of an optical transmission channel, the method comprising:

- providing a plurality of signal samples at successive time instances; wherein each signal sample comprises a signal phase, the signal phase comprises a data phase and a residual phase,
  for each successive signal sample of a successive time instance :

  determining a slowly-varying noise phase, and shifting the signal sample by the slowly-varying noise phase, in order to generate an intermediate signal sample having a shifted signal phase, for each successive intermediate signal sample of a successive time instance:

  determining a rapidly varying noise phase, wherein the rapidly varying noise phase has a variation time different from a variation time of the slowly-varying noise phase, shifting the intermediate signal sample by the rapidly varying noise phase, in order to generate a phase-corrected signal sample.

For example, the rapidly varying noise phase has a variation time different from a variation time of the slow-varying noise phase by one or more order of magnitude.

Thanks to these features, the number of cycle slips in a received signal is lowered compared to a simple CPE filter.

In embodiments, such a method may comprise one or more of the following features:
In embodiments, the method further comprises, prior to shifting the signal sample, applying an unwrapping function to the slowly varying noise phase such that the continuity of the slowly-varying noise phase is recovered.

In embodiments, no unwrapping function is applied to the rapidly varying noise phase.

Thanks to these features, the cycle-slips are lowered compared to a method only comprising an evaluation of a global noise phase instead of differentiating two noise phases having different varying rates. By contrast with the method differentiating between the slowly-varying noise phase and the rapidly varying noise phase, the unwrapping function increases the cycle slips in a method only comprising an evaluation of a global noise phase wherein. For example, a method only comprising applying a VV algorithm having a low number of taps leads to an exaggeration of the cycle-slips.

In embodiments, the slowly varying noise phase is a laser noise phase and the rapidly varying noise phase is a nonlinear noise phase.

In embodiments, the method may further comprise:

determining another noise phase, wherein the other noise phase has a variation time different from a variation time of the slowly and rapidly varying noise phases,

further shifting the intermediate signal sample by the other noise phase, in order to generate the phase-corrected signal sample, wherein the signal sample is free from the residual phase.

In embodiments, the plurality of signal samples is associated with a modulation scheme and a carrier phase, wherein determining the slowly-varying noise phase comprises:

canceling the carrier phase from the signal sample by taking into account the modulation scheme; thereby yielding the signal phase;
selecting the signal phase
averaging the selected signal phase with the yielded signal phases of a number $K_1$ of successive preceding signal samples and a number $K_1$ of successive succeeding signal samples, in order to recover the slowly-varying noise phase , wherein $K_1$ is a selected integer.

In embodiments, the plurality of signal samples is associated with a modulation scheme and a carrier phase, wherein determining the rapidly varying noise phase comprises:

selecting the shifted signal phase,
averaging the selected shifted signal phase with the shifted signal phases of a number $K_2$ of successive preceding intermediate signal samples and a number $K_2$ of successive succeeding intermediate signal samples, in order to recover the rapidly varying noise phase, wherein $K_2$ is a selected integer.

In embodiments, averaging the selected signal phase and/or the selected shifted signal phase is performed by applying a carrier phase estimation algorithm.

For example, the algorithm may be selected in the list consisting of: a Viterbi and Viterbi (VV) algorithm, a least square equalizer algorithm, for example a one-tap normalized least mean square (NLMS) method, a block-average method, a blind phase search algorithm etc.

The method may be used to generate a phase-corrected signal sample from a plurality of signal samples associated with various modulation schemes. For example, the modulation scheme may be any phase shift keying (PSK). For example, the modulation scheme may be a quadrature phase shift keying (QPSK) modulation, for example a n- quadrature amplitude modulation (QAM), n being an integer. The modulation scheme may also be a multiple phase shift keying (MPSK) modulation.

For example, the modulation scheme is a 16-QAM modulation scheme and averaging the selected signal phase is performed by applying a Blind Phase Search algorithm, whereas averaging the selected shifted signal phase is performed by applying a VV algorithm.

In embodiments, the modulation scheme is an M-modulation and canceling the carrier phase comprises applying an M-Power to the signal sample. Thank to theis feature, the data-dependent phase is removed.

In embodiments, the method further comprises a step of applying an argument function to the signal sample, wherein shifting the signal sample comprises to multiply the signal sample by the argument inverse function applied to the slowly varying noise phase.

In embodiments, the step of applying the argument function is performed prior to the step of shifting the signal sample.

In embodiments, the method further comprises a step of applying an argument function to the intermediate signal sample, wherein shifting the intermediate signal sample comprises to multiply the intermediate signal sample by the argument inverse function applied to the rapidly varying noise phase.

In embodiments, the step of applying the argument function is performed prior to the step of shifting the intermediate signal sample.

In embodiments, $K_1$ is a fixed integer comprised in the range [7-1000].

In embodiments, the ratio between $K_2$ and $K_1$

is lower than ½, preferably $\dfrac{K_2}{K_1}$ is lower than 1/10. For example, $K_2$ and $K_1$ are different by one or several orders of magnitude. For example, $K_1$ is equal to 101.

In embodiments, $K_2$ is selected by measuring the non-linearity of the optical transmission channel.

In embodiments, $K_1$ is a fixed integer. In embodiments, $K_2$ is an integer. In embodiments, $K_1$ is variable and automatically adjusted with regard to the selected intermediate signal sample.

In embodiments, $K_2$ is variable and automatically adjusted with regard to the selected intermediate signal sample.

In embodiments, the invention also provides a device for correcting the phase shift of an optical transmission channel, the device comprising:

- an input for receiving a plurality of signal samples at successive time instances; wherein each signal sample comprises a signal phase, the signal phase comprises a data phase and a residual phase,
- a first filter configurable to, for each successive signal sample of a successive time instance,

  ○ determining a slowly-varying noise phase, and
  ○ shifting the signal sample by the slowly-varying noise phase, in order to generate an intermediate signal sample having a shifted signal phase,

- a second filter configurable to, for each successive intermediate signal sample of a successive time instance:

  ○ determining a rapidly varying noise phase, wherein the rapidly varying noise phase has a variation time different from a variation time of the slow-varying noise phase,
  ○ shifting the intermediate signal sample by the rapidly varying noise phase, in order to generate a phase-corrected signal sample.

In embodiments, the first filter further comprises:

  ○ a data phase cancelation unit configurable for canceling the carrier phase from the signal sample by taking into account the modulation scheme; thereby yielding the signal phase;
  ○ an averaging unit configurable for selecting the signal phase and averaging the selected signal phase with the yielded signal phases of a number $K_1$ of successive preceding signal samples and a number $K_1$ of successive succeeding signal samples, in order to determine the slowly-varying noise phase, wherein $K_1$ is a selected integer,

- a factor unit configurable to shift the signal sample by the slowly-varying noise phase, in order to generate an intermediate signal sample having a shifted signal phase, wherein the factor unit is connected to the input and averaging unit of the first filter.

In embodiments, the second filter further comprises:

an averaging unit configurable for selecting the shifted signal phase and averaging the selected shifted signal phase with the shifted signal phases of the $K_2$ intermediate signal samples preceding and of the $K_2$ intermediate signal samples succeeding the intermediate signal sample of the selected shifted signal phase, in order to determine the rapidly varying noise phase, wherein $K_2$ is a selected integer, a factor unit configurable to shift the intermediate signal sample by the rapidly varying noise phase, in order to generate a phase-corrected signal sample, wherein the signal sample is free from the residual phase, wherein the factor unit is connected to the averaging unit of the second filter and to an output, an output configurable to transmit the phase-corrected signal sample.

In embodiments, such a device may comprise one or more of the following features:

In embodiments, the first filter further comprises:

an argument function unit configurable to apply the argument function **arg()** for recovering the slow-varying noise phase, and a phase shift unit configurable to generate a shift factor by applying the inverse function $e^{j()}$ of the argument function **arg()** to the opposite of the slowly-varying noise phase, such that the factor unit may shift the signal sample by multiplying the signal sample with the shift factor.

In embodiments, the second filter further comprises:

an argument function unit configurable to apply the argument function **arg()** for recovering the rapidly varying noise phase, and a phase shift unit configurable to generate a shift factor by applying the inverse function $e^{j()}$ of the argument function **arg()** to the opposite of the rapidly varying noise phase, such that the factor unit may shift the intermediate signal sample by multiplying the intermediate signal sample with the shift factor.

No unwrapping function **unwrap(.)** is applied in the second filter.

In embodiments, the first filter further comprises:

an unwrapping unit which is configurable to unwrap the slow-varying phase.

**Brief description of the drawings**

These and other aspects of the invention will be apparent from and elucidated with reference to the embodiments described hereinafter, by way of example, with reference to the drawings.

Figure 1 is a functional representation showing a device for estimating a phase, according to an embodiment of the invention.

Figure 2 is a histogram of compared number of erroneous sequences when the phase is corrected by use of the device of Fig. 1 compared to a prior art CPE.

Figure 3 is a functional representation of an example of the device of figure 1.

Figure 4 is a functional representation of another example of the device of figure 1.

## Detailed description of the embodiments

In an optical transmission chain, a transmitter sends a sent signal $S_{in}$ in an optical line. The sent signal is distorted during the transmission in the optical line. The phase of the sent data may be rotated, also referred to as shifted, by different effects along the transmission of the sent signal $S_{in}$. Namely, the sent signal $S_{in}$ is submitted to phase shift due to nonlinear effects and due to laser noise phase. The distorted sent signal is received by a receiver which is connected to a device 1 in order to recover the sent signal.

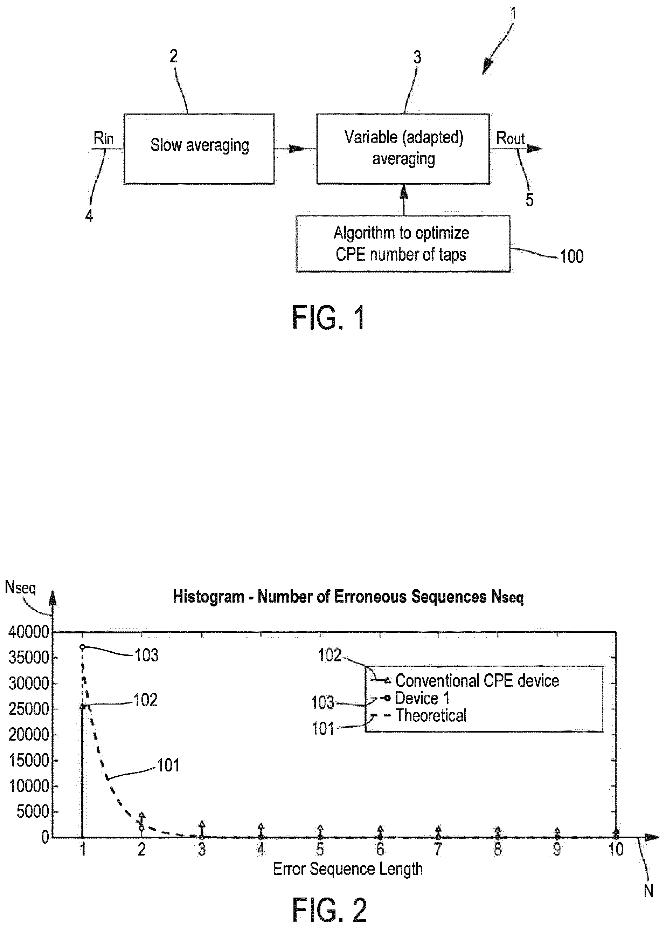

With reference to Figure 1, a device 1 according to an embodiment , for estimating a phase is provided.

The device 1 comprises a first filter 2 and a second filter 3 connecting each other, an input 4 connected to the first filter 2 and an output 5 connected to the second filter 3.

The input 4 is configured to receive a signal $R_{in}$

$$R_{in}(t) = S_{in}(t)e^{j\theta(t)}$$

wherein t denotes for the time, $R_{in}$ denotes for the received signal, $S_{in}$ denotes for the sent signal, and $\theta$ denotes for the phase shift.

Typically, it can be assumed that the NL induced noise phase and the laser noise phase are independent. The sent signal $S_{in}$ comprises the data phase and amplified spontaneous emission (ASE) noise which may be modelled as an additive white Gaussian noise. This additive white Gaussian noise is an extra phase shift easily removable. Therefore, the total phase shift comprises the extra phase shift and the phase shift $\theta$ whose purpose of the following description is to be estimated and suppressed from the signal

The phase shift $\theta$ may be modelled as follows.

$$\theta = \theta_{LN} + \theta_{NL} \quad ,$$

wherein $\theta_{LN}$ denotes for the laser noise phase and $\theta_{NL}$ denotes for the nonlinear phase shift.

For example, a Q-PSK sent signal may be modelled as follows: $S_{in}(t) = A_{in}(t)e^{j\left(\omega t + (2n-1)\frac{\pi}{4}\right)}$ ,

wherein $A_{in}$ denotes for the amplitude impacted by the ASE noise, $\omega$ denotes for the frequency of the carrier signal, n is an integer taking a value in the set [1, 2, 3, 4] for coding each bit, and the data phase is denoted by

$$(2n-1)\frac{\pi}{4}.$$

The signal $R_{in}$ is sampled, such that each sample may be denoted as follows:

$$r_i = s_i e^{j\theta_i}$$

wherein i denotes for the index of the sample, $r_i$ denotes for the sampled signal, $s_i$ denotes for the sampled sent signal, $\theta_i$ denotes for the sampled phase shift.

The aim of the first filter 2 of the device 1 is to correct the phase shift due to the laser noise phase, which will be referred to in the following as the laser noise (LN) phase, whereas the aim of the second filter 3 of the device 1 is to independently correct the phase shift due to the nonlinear effects, which will be referred to in the following as the nonlinear (NL) phase,.

The first filter 2 is configured to, for each received sampled nonlinear signal:

- remove modulation from the sampled nonlinear signal $r_i$,
- Apply filtering, also referred to as smoothing, of the received sampled nonlinear signal, which are complex values,

For example, the filtering may be performed by extracting the shifted phase $\theta_i$ from the sampled nonlinear signal $r_i$ prior to averaging the sampled phase $\theta_i$ with a number $2K_i+1$ of sampled phases whose indexes are comprised between $i-K_1$ and $i+K_1$, wherein $K_1$ is an integer.

- unwrap the phase of the filtered sampled nonlinear signal $r_i$, in order to recover a mean sampled phase $\hat{\theta}_i$,
- Rotate the received sample phase $\theta_i = arg(r_i)$ by the corresponding estimated phase $\hat{\theta}_i$.

The first filter 2 will estimate the LN phase $\theta_{LN}$ in an almost optimal way. The LN phase $\theta_{LN}$ is considered to be almost equal to the mean sampled phase $\hat{\theta}_i$.

The first filter 2 may be further configured to:

- generate an intermediate signal $r_i'$ which is similar as the sampled signal, rotated by the mean sampled phase:

$$r_i' = s_i e^{j(\theta_i - \hat{\theta}_i)}$$

Therefore the first filter 2 enables to remove the LN phase $\hat{\theta i}$ from the received signal $R_{in}$. The first filter 2 acts as a CPE, robust to cycle-slips. The first filter operates a slow averaging. In other words, the first filter 2 acts as a high-pass filter that partially corrects the phase, but that does not compensate for the nonlinear effects on the signal.

In an example, the number $K_1$ is equal to 101. In general, the number $K_1$ may be lowered compare to 101 in case of limitations implied by the hardware or energy consumption without any significant impact on performance.

The first filter 2 may use an algorithm selected in the list consisting of:

- the Viterbi and Viterbi estimator,
- the Least Square Equalizer (LSE),
- the Blind Phase Search (BFS)
- etc

The intermediate signal $r_i'$ is sent by the first filter 2 to the second filter 3.

The second filter 3 is configured to, for each intermediate signal $r_i'$:

- Remove phase modulation,
- Apply filtering of the complex samples, for instance by extracting the LN phase $\hat{\theta}_i$ from the intermediate signal $r_i'$ prior to averaging the LN phase $\hat{\theta}_i$ with a number $2K_2+1$ of sampled phases whose indexes are comprised between $i-K_2$ and $i+K_2$ in order to recover a mean sampled phase $\hat{\theta}_i'$,
- rotate the phase of the phase of the intermediate sample $r_i'$ by $\hat{\theta i}'$

The second filter 3 estimates the NL phase shift $\theta_{NL}$ in an almost optimal way. The NL phase shift $\theta_{NL}$ is considered to be almost equal to the mean sampled phase $\hat{\theta}_i'$.

The second filter 3 may be further configured to :

- generate a corrected signal $r_i''$ which is similar as the intermediate signal $r_i'$, rotated by the mean sampled phase $\hat{\theta}_i'$:

$$r_i'' = s_i e^{j(\theta_i - \hat{\theta}_i - \hat{\theta}_{i'})}$$

The second filter 3 acts as a correlated noise phase remover.

The number $K_2$ may be fixed or variable as a function of the sampled nonlinear signal. With reference to Figure 1, the number $K_2$ of the second filter 3 may be configured by use of an optional optimizing unit 100 which is configured to select $K_2$ by use of an algorithm to optimize the averaging.

For example, the optimizing unit 100 may be configured to select $K_2$ by use of any of the following list consisting in:

- Viterbi&Viterbi Nonlinear estimation of PSK-modulated carrier phase with application to burst digital transmission published in IEEE Transactions on Information Theory archive, Volume 29 Issue 4, July 1983, Page 543-551, wherein $K_2$ is inversely related to $\Delta\omega$ which is the frequency uncertainty depending on the stability of the laser source, or
- EP2337241,
- any algorithm already used to optimize CPE,
- empirically chosen algorithm.

Indeed, the selected number $K_2$ may be very low (for example $K_2 \cong 1$). In such a case, the averaging is referred to as a fast averaging. This last case is selected for example if the nonlinear noise is low-pass.

Furthermore, the selected number $K_2$ may as well be selected higher (for example $K_2 \gg 1$). In such a case, the averaging is referred to as slow averaging. This last case is selected for example if the noise and/or nonlinear interference Power Spectrum Density is flat.

In a preferred embodiment, $K_2$ is an integer that adapts automatically as a variable function of the NL effects of the sent signal.

The output 5 is configured to receive the corrected sampled signal, which is the recovered sent signal, free from the phase shift $\theta$. In other words the recovered sent signal is almost free from both the laser noise phase $\theta_{LN}$ and the nonlinear phase shift $\theta_{NL}$.

Figure 2 illustrates the advantages of using the device 1 rather than a conventional CPE device for a simulated Additive white Gaussian noise (AWGN) channel transmitting a signal of $5*10^5$ symbols for a SNR=6 dB.

Figure 2 represents a histogram of erroneous sequences. The abscissa represents the error sequence length and is referred by the number N. The ordinate represents the number of times that a number N of consecutive errors are found in a transmitted sequence and is referred by the number of sequences $N_{seq}$.

The triangle markers 102 illustrate the results obtained with the use of a conventional CPE device using 3 taps. The round markers 103 illustrate the results obtained with the use of device 1 with the first filter configured to $K_1$=101 and the second filter configure to $K_2$=3.

The dashed curve 101 corresponds to the theoretical number of consecutive errors of the AWGN channel, given a certain error probability, denoted by $p_e$. The dashed curve 101 represents the following function of N:

$$(1 - p_e)^2 (p_e)^N N_{symb}$$

wherein $(1-p_e)$ represents the probability of a correct symbol at the beginning, $(p_e)^N$ represents a number N of consecutive erroneous symbols, and $(1 - p_e)$ represents a

correct symbol in the end, multiplied back by the total number of symbols $N_{symb}$.

Comparing the device 1 to a conventional CPE device, one can remark that the number of unique symbol errors (N=1) are only modestly increased, while consecutive errors (i.e. N>1) are severely reduced and almost eliminated by the device 1.

For example, the conventional CPE device yields 2458 erroneous sequences having three consecutive errors (N=3) whereas the device 1 only leads to 112 erroneous sequences having three consecutive errors (N=3). For three consecutive errors, the device 1 decreases by a 10th reduction the probability of having an erroneous sequence.

The dashed curve 101 is almost interpolating the round markers 103. Indeed, the probability of having an erroneous sequence when using the device 1 is very close to the theoretical number of consecutive errors of the AWGN channel. By contrast, when using a conventional CPE device, the number of erroneous sequences raises compared to the theoretical number of consecutive errors of the AWGN channel.

The difference is due to the fact that a conventional CPE device introduces additional ambiguities to the symbol phases. By contrast, the device 1 almost achieves the theoretical optimum in terms of consecutive error probability, thus removing the additional ambiguity-driven errors.

Device 1 has been tested on a variety of systems and propagation regimes from both a nonlinear-noise performance perspective and a cycle-clips probability perspective. The optimization of the average BER performance compared to the use of a conventional CPE device has been demonstrated for all tested systems and propagation regimes.

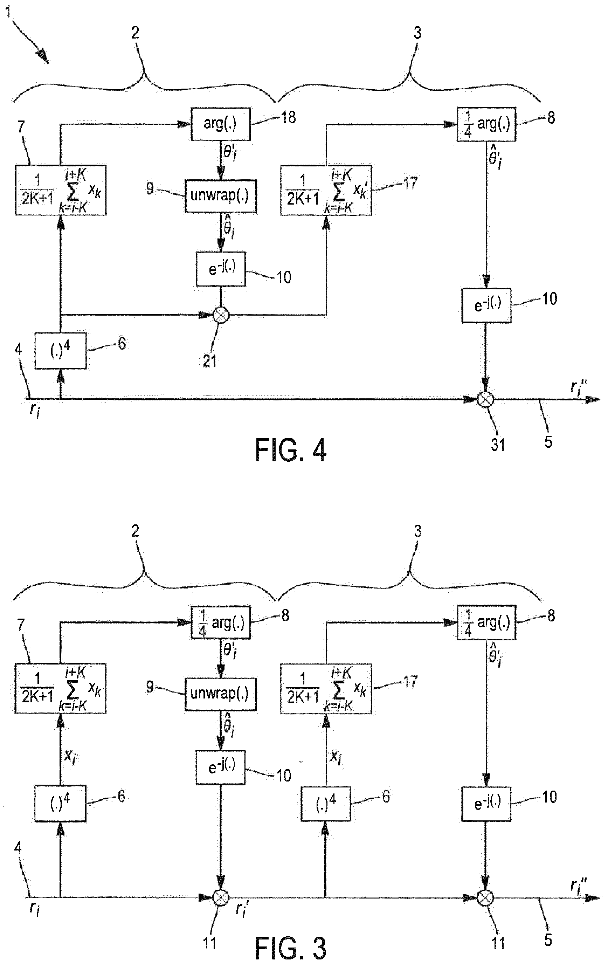

With reference to figure 3, a device 1 according to an embodiment is pictured.

The first filter 2 and the second filter 3 are identified by brackets.

The first filter 2 comprises a plurality of processing units successively connected to each other:

- a data phase cancelation unit 6 which cancels the signal phase by raising the received signal to the Mth power, i.e. to a power corresponding to the underlying M-PSK modulation scheme. The data phase cancelation unit 6 generates, for each sampled received signal, a sampled intermediate $x_i$.

For example, the received signal is modulated according to a QPSK, also referred to as a 4-PSK modulation scheme. In such a case, M is equal to 4 and the received sampled signal $r_i = s_i e^{j\theta_i}$ is raised to the 4th power as follows: $r_i^4 = s_i^4 e^{4j\theta_i}$. The data phase is removed by isolating the member $e^{4\omega t}$, wherein $\omega$ denotes for the frequency of the data signal in the sent signal $s_i$. The result of the processing is $x_i = (s_i^4 e^{-4\omega t})e^{4j\theta_i}$.

- an averaging unit 7 which provides an estimate of the carrier phase by averaging the sampled intermediates $x_i$ thanks to a moving window selecting the $x_k$ wherein k is comprises between $i-K_1$, $i+K_1$. The averaging unit 7 generates, for each sampled intermediate, an averaged sampled intermediate

$$\hat{x}_i = \frac{1}{2K_1+1}\sum_{k=i-K_1}^{i+K_1} x_k.$$

The averaging unit 7 of the first filter 2 is configured with a large moving window of a fixed number equal to $2K_1+1$, wherein $K_1$ is selected much higher than one, for example $K_1=100$ or $K_1=1000$.

- an argument function unit 8 configured to apply the argument function **arg()** to each average sampled intermediate $\hat{x}_i$ in order to generate the wrapped shifted phase $\theta_i' = \frac{1}{M}\arg(\hat{x}_i).$ The argument function unit 8 is further configured to divide the determined carrier phase estimate by the value M corresponding to the underlying M-PSK modulation scheme. This "divide"-operation is a consequence of the "raising to the power of M"-operation which results in a multiplication by a factor M of the signal phase. Consequently, the estimated phase should be divided by the factor M, in order to yield the estimate of the carrier phase.

For example, the argument function unit 8 is configured to generate $\theta_i' = \frac{1}{4}\arg(\hat{x}_i)$ in the previous example of a sent signal modulated by a QPSK modulation scheme.

- an unwrapping unit 9 which is configured to unwrap the wrapped shifted phase $\theta_i'$, i.e. which is configured to reconstruct the continuity of the phase signal. The unwrapping unit 9 generates, for each sampled received signal $s_i$, an unwrapped shifted phase

$$\hat{\theta}_i = unwrap(\theta_i').$$

- a first phase shift unit 10 which is configured to generated a laser noise (LN) phase shift factor $e^{-j\hat{\theta}_i}$ by applying the inverse function **e<sup>j()</sup>** of the argument function **arg()** to the opposite of the unwrapped shifted phase $\hat{\theta}_i$, wherein for any phase $\phi$, $\phi = \arg(Re^{j\phi})$, R being any number.

The input 4 and the first phase shift unit 10 are connected by a first factor unit 11 which is configured to generate a phase-shifted received sampled signal $r_i' = r_i e^{-j\hat{\theta}_i}.$ In other words, through this factor unit the input signal samples $r_i$ are multiplied by the factor

$exp(-j\hat{\theta}_i)$, with $\hat{\theta}_i$ calculated as a function of the neighboring samples, as discussed before.

The phase-shifted received sampled signal $r_i'$ is sent to the second filter 3.

The second filter 3 comprises a plurality of processing units successively connected to each other. The second filter 3 is similar to the first filter 2. Similar processing units are identified by the same reference number raised by 10 and identical units are identified by the same reference number as in the first filter 2.

The processing units comprised in the second filter 3 are described below:

- a data phase cancelation unit 6 identical to the one in the first filter 2.
- an averaging unit 17 which is configured to average the sampled intermediates $x_i$ thanks to a moving window selecting the $x_k$ wherein k is comprises between $i-K_2$, $i+K_2$, wherein $K_2$ may be constant or variable. The averaging unit 17 generates, for each sampled intermediate, an averaged sampled intermediate

$$\hat{x}_i = \frac{1}{2K_2+1}\sum_{k=i-K_2}^{i+K_2} x_k.$$

The averaging unit 17 of the second filter 3 is configured with a small moving window of a number equal to $2K_2+1$, wherein $K_2$ is selected at least smaller as $100K_1$.

- an argument function unit 8 identical to the one in the first filter 2 which generates a NL phase shift $\hat{\theta}_i'$.

By contrast with the first filter 2, the second filter 3 does not comprise an unwrapping unit 9. Indeed, the continuity of the phase signal is already reconstructed in the first filter 2.

- a second phase shift unit 10 which is configured to generated a NL phase shift factor $e^{-j\hat{\theta}_i'}$.

The first factor unit 11 and the second phase shift unit 10 are connected by a second factor unit 11 which is configured to generate a corrected received sampled signal $r_i'' = r_i' e^{-j\hat{\theta}_i'}$.

The corrected received sampled signal $r_i''$ is sent to the output 5.

The second filter (filter 3) is particularly useful to track the residual rapid phase variations unrecovered by the first stage. Such a filter is not followed by an unwrap block since phase equivocation has been compensated for by the first stage.

With reference to Figure 4, a device 1 according to an alternate embodiment is pictured.

Similar processing units are identified by the same reference number raised by 10 and identical units are identified by the same reference number as in Figure 3.

The device 1 pictured on Figure 4 is similar to the device 1 pictured on Figure 3 with two major differences.

A first difference with regard to Figure 3 is that the data phase cancelation unit 6 of the first filter 2 of Figure 4 is connected to the input 4 and to both the averaging unit 7 of the first filter 2 and a first factor unit 21 of the first filter 2. The first factor unit 21 is configured to generate a phase-shifted received sampled signal $r_i'^M = r_i^M e^{-Mj\hat{\theta}_i}$. In the previous examples, the number M is equal to 4. By contrast, in the first filter 2 of Figure 3, the data phase cancelation unit 6 of the first filter 2 is connected to the input 4 and only to the averaging unit 7, and the generated phase-shifted received sampled signal is not raised to the $M^{th}$ power.

A second difference with regard to Figure 3 is that the argument function unit 18 is configured to apply the argument function to each average sampled intermediate $\hat{x}_i$ in order to generate the wrapped shifted phase $\theta_i' = \arg(\hat{x}_i)$. By contrast with the first filter 2 of Figure 3, the argument function unit 18 is not configured to divide the determined carrier phase estimate by the value M.

A third difference with regard to Figure 3 is that the input 4 is directly connected to a second factor unit 31 whereas the first factor unit 21 is connected to the averaging unit 17 of the second filter 3.

A fourth difference with regard to Figure 3 is that the second filter 3 does not comprises a data phase cancelation unit 6 as in Figure 3. Indeed, as the data phase cancelation unit 6 of the first filter 2 is connected to the averaging unit 17 of the second filter 3 through the first factor unit 21, a second data phase cancelation unit would be useless.

The second filter 3 comprises same argument function unit 8 and phase shift unit 10 as the processing units of the second filter 3 of Figure 3.

The phase shift unit 10 is connected to the second factor unit 31 which is connected to the output 5.

Elements such as any processing unit could be hardware means, or a combination of hardware and software means, or at least one microprocessor and at least one memory with software modules located therein.

An element referred to as a "filter" in the described embodiments may also be referred to as an estimating unit. Indeed, the filters described may comprise complex functions, as e.g. Blind Phase Search or VV algorithm.

The invention is not limited to the described embodiments. The appended claims are to be construed as embodying all modification and alternative constructions that may be occurred to one skilled in the art, which fairly fall within the basic teaching here, set forth.

For example, the argument function unit 8 and the averaging unit 7 may be permutated in any of the filters.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

**Claims**

1. A method for correcting the phase shift of an optical transmission channel, the method comprising:

    - providing a plurality of signal samples at successive time instances; wherein each signal sample comprises a signal phase, the signal phase comprises a data phase and a residual phase,

    **characterized by** for each successive signal sample of a successive time instance:

    - determining a slowly-varying noise phase, and
    - shifting the signal sample by the slowly-varying noise phase, in order to generate an intermediate signal sample having a shifted signal phase,

    for each successive intermediate signal sample of a successive time instance:

    - determining a rapidly varying noise phase, wherein the rapidly varying noise phase has a variation time different from a variation time of the slowly-varying noise phase,
    - shifting the intermediate signal sample by the rapidly varying noise phase, in order to generate a phase-corrected signal sample.

2. A method according to claim 1, further comprising, prior to shifting the signal sample, applying an unwrapping function to the slowly varying noise phase such that the continuity of the slowly varying noise phase is recovered.

3. A method according to claim 1, wherein the plurality of signal samples is associated with a modulation scheme and a carrier phase, wherein determining the slowly-varying noise phase comprises:

    - canceling the carrier phase from the signal sample by taking into account the modulation scheme; thereby yielding the signal phase;
    - selecting the signal phase
    - averaging the selected signal phase with the yielded signal phases of a number $K_1$ of successive preceding signal samples and a number $K_1$ of successive succeeding signal samples, in order to recover the slowly-varying noise phase, wherein $K_1$ is a selected integer.

4. A method according to claim 1, wherein the plurality of signal samples is associated with a modulation scheme and a carrier phase, wherein determining the rapidly varying noise phase comprises:

    - selecting the shifted signal phase,
    - averaging the selected shifted signal phase with the shifted signal phases of a number $K_2$ of successive preceding intermediate signal samples and a number $K_2$ of successive succeeding intermediate signal samples, in order to recover the rapidly varying noise phase, wherein $K_2$ is a selected integer.

5. A method according to claim 3 or 4, wherein averaging the selected signal phase and/or the selected shifted signal phase is performed by applying a carrier phase estimation algorithm.

6. A method according to one of claims 3 to 5, wherein the modulation scheme is an M-modulation and canceling the carrier phase comprises applying an M-Power to the signal sample, wherein M is a multiplication factor of the signal phase.

7. A method according to claim 1, further comprising a step of applying an argument function to the signal sample, wherein shifting the signal sample comprises to multiply the signal sample by the argument inverse function applied to the slowly varying noise phase.

8. A method according to claim 1, further comprising a step of applying an argument function to the intermediate signal sample, wherein shifting the intermediate signal sample comprises to multiply the intermediate signal sample by the argument inverse function applied to the rapidly varying noise phase.

9. A method according to claim 3, wherein $K_1$ is a fixed integer comprised in the range [7-1000].

10. A method according to claims 3 and 4, wherein the ratio between $K_2$ and $K_1$ is lower than ½, preferably lower than 1/10.

**11.** A method according to claim 4, wherein $K_2$ is selected by measuring the non-linearity of the optical transmission channel.

**12.** A method according to claim 4, wherein $K_2$ is variable and automatically adjusted with regard to the selected intermediate signal sample.

**13.** A device (1) for correcting the phase shift of an optical transmission channel, the device comprising:

- an input (4) for receiving a plurality of signal samples at successive time instances; wherein each signal sample comprises a signal phase, the signal phase comprises a data phase and a residual phase,

**characterized by** a first filter (2) configurable to, for each successive signal sample of a successive time instance:

- determining a slow-varying noise phase, and
- shifting the signal sample by the slow-varying noise phase, in order to generate an intermediate signal sample having a shifted signal phase,

a second filter (3) configurable to, for each successive intermediate signal sample of a successive time instance:

- determining a rapidly varying noise phase, wherein the rapidly varying noise phase has a variation time different from a variation time of the slowly-varying noise phase, shifting the intermediate signal sample by the rapidly varying noise phase, in order to generate a phase-corrected signal sample .

**Patentansprüche**

**1.** Verfahren zum Korrigieren der Phasenverschiebung eines optischen Übertragungskanals, wobei das Verfahren Folgendes umfasst:

Bereitstellen mehrerer Signalproben bei sukzessiven Zeitinstanzen; wobei jede Signalprobe eine Signalphase umfasst, wobei die Signalphase eine Datenphase und eine Restphase umfasst, **gekennzeichnet durch**, für jede sukzessive Signalprobe einer sukzessiven Zeitinstanz:

Bestimmen einer langsam variierenden Rauschphase, und Verschieben der Signalprobe um die langsam variierende Rauschphase, um eine Zwischensignalprobe mit einer verschobenen Signalphase zu erzeugen, für jede sukzessive Zwischensignalprobe einer sukzessiven Zeitinstanz:

Bestimmen einer schnell variierenden Rauschphase, wobei die schnell variierende Rauschphase eine Variationszeit aufweist, die sich von einer Variationszeit der langsam variierenden Rauschphase unterscheidet, Verschieben der Zwischensignalprobe um die schnell variierende Rauschphase, um eine phasenkorrigierte Signalprobe zu erzeugen.

**2.** Verfahren nach Anspruch 1, ferner umfassend, vor dem Verschieben der Signalprobe, Anwenden einer Unwrapping-Funktion an der langsam variierenden Rauschphase, sodass die Kontinuität der langsam variierenden Rauschphase wiederhergestellt wird.

**3.** Verfahren nach Anspruch 1, wobei die mehreren Signalproben mit einem Modulationsschema und einer Trägerphase assoziiert sind, wobei das Bestimmen der langsam variierenden Rauschphase Folgendes umfasst:

Aufheben der Trägerphase aus der Signalprobe, indem das Modulationsschema berücksichtigt wird; wodurch die Signalphase erhalten wird; Auswählen der Signalphase, Bilden eines Mittelwerts der ausgewählten Signalphase mit den erhaltenen Signalphasen einer Anzahl $K_1$ von sukzessiven vergangenen Signalproben und einer Anzahl $K_1$ von sukzessiven nachfolgenden Signalproben, um die langsam variierende Rauschphase wiederherzustellen, wobei $K_1$ eine ausgewählte ganze Zahl ist.

**4.** Verfahren nach Anspruch 1, wobei die mehreren Signalproben mit einem Modulationsschema und einer Trägerphase assoziiert sind, wobei das Bestimmen der schnell variierenden Rauschphase Folgendes umfasst:

Auswählen der verschobenen Signalphase, Bilden des Mittelwerts der ausgewählten verschobenen Signalphase mit den verschobenen Signalphasen einer Anzahl $K_2$ von sukzessiven vergangenen Zwischensignalproben und einer Anzahl $K_2$ von sukzessiven nachfolgenden Zwischensignalproben, um die schnell variierende Rauschphase wiederherzustellen, wobei $K_2$ eine ausgewählte ganze Zahl ist.

**5.** Verfahren nach Anspruch 3 oder 4, wobei das Bilden des Mittelwerts der ausgewählten Signalphase und/oder der ausgewählten verschobenen Signalphase durch das Anwenden eines Trägerphasenschätzalgorithmus durchgeführt wird.

6. Verfahren nach einem der Ansprüche 3 bis 5, wobei das Modulationsschema eine M-Modulation ist und das Aufheben der Trägerphase ein Anwenden einer M-Potenz an der Signalprobe umfasst, wobei M ein Multiplikationsfaktor der Signalphase ist.

7. Verfahren nach Anspruch 1, ferner umfassend einen Schritt des Anwendens einer Argumentfunktion an der Signalprobe, wobei das Verschieben der Signalprobe ein Multiplizieren der Signalprobe mit der inversen Argumentfunktion, angewendet an der langsam variierenden Rauschphase, umfasst.

8. Verfahren nach Anspruch 1, ferner umfassend einen Schritt des Anwendens einer Argumentfunktion an der Zwischensignalprobe, wobei das Verschieben der Zwischensignalprobe ein Multiplizieren der Zwischensignalprobe mit der inversen Argumentfunktion, angewendet an der schnell variierenden Rauschphase, umfasst.

9. Verfahren nach Anspruch 3, wobei $K_1$ eine feste ganze Zahl ist, die im Bereich [7-1000] enthalten ist.

10. Verfahren nach den Ansprüchen 3 und 4, wobei das Verhältnis zwischen $K_2$ und $K_1$ geringer als ½ ist, vorzugsweise geringer als 1/10.

11. Verfahren nach Anspruch 4, wobei $K_2$ ausgewählt wird, indem die Nichtlinearität des optischen Übertragungskanals gemessen wird.

12. Verfahren nach Anspruch 4, wobei $K_2$ variabel ist und bezüglich der ausgewählten Zwischensignalprobe automatisch angepasst wird.

13. Vorrichtung (1) zum Korrigieren der Phasenverschiebung eines optischen Übertragungskanals, wobei die Vorrichtung Folgendes umfasst:

einen Eingang (4) zum Empfangen mehrerer Signalproben bei sukzessiven Zeitinstanzen; wobei jede Signalprobe eine Signalphase umfasst, wobei die Signalphase eine Datenphase und eine Restphase umfasst, **gekennzeichnet durch** ein erstes Filter (2), das für jede sukzessive Signalprobe einer sukzessiven Zeitinstanz für Folgendes konfigurierbar ist:

Bestimmen einer langsam variierenden Rauschphase, und
Verschieben der Signalprobe um die langsam variierende Rauschphase, um eine Zwischensignalprobe mit einer verschobenen Signalphase zu erzeugen, ein zweites Filter (3), das für jede sukzessive Zwischensignalprobe einer sukzessiven Zeitinstanz für Folgendes konfigurierbar ist:

Bestimmen einer schnell variierenden Rauschphase, wobei die schnell variierende Rauschphase eine Variationszeit aufweist, die sich von einer Variationszeit der langsam variierenden Rauschphase unterscheidet, Verschieben der Zwischensignalprobe um die schnell variierende Rauschphase, um eine phasenkorrigierte Signalprobe zu erzeugen.

## Revendications

1. Procédé de correction du décalage de phase d'un canal de transmission optique, le procédé comprenant :

- l'obtention d'une pluralité d'échantillons de signal à des occurrences temporelles successives ; chaque échantillon de signal comprenant une phase de signal, la phase de signal comprenant une phase de données et une phase résiduelle,

**caractérisé par**, pour chaque échantillon de signal successif d'une occurrence temporelle successive :

- la détermination d'une phase de bruit à variation lente, et
- le décalage de l'échantillon de signal par la phase de bruit à variation lente, afin de générer un échantillon de signal intermédiaire ayant une phase de signal décalée,

pour chaque échantillon de signal intermédiaire successif d'une occurrence temporelle successive :

- la détermination d'une phase de bruit à variation rapide, la phase de bruit à variation rapide ayant un temps de variation différent d'un temps de variation de la phase de bruit à variation lente,
- le décalage de l'échantillon de signal intermédiaire par la phase de bruit à variation rapide, afin de générer un échantillon de signal à phase corrigée.

2. Procédé selon la revendication 1, comprenant en outre, avant le décalage de l'échantillon de signal, l'application d'une fonction de dépliement à la phase de bruit à variation lente de telle sorte que la continuité de la phase de bruit à variation lente est récupérée.

3. Procédé selon la revendication 1, dans lequel la pluralité d'échantillons de signal est associée à un schéma de modulation et une phase porteuse, la détermination de la phase de bruit à variation lente comprenant :

> - la suppression de la phase porteuse de l'échantillon de signal par prise en compte du schéma de modulation ; ainsi, la production de la phase de signal ;
> - la sélection de la phase de signal ;
> - le calcul de la moyenne de la phase de signal sélectionnée avec les phases de signal produites d'un nombre $K_1$ d'échantillons de signal précédents successifs et d'un nombre $K_1$ d'échantillons de signal suivants successifs, afin de récupérer la phase de bruit à variation lente, $K_1$ étant un entier sélectionné.

4. Procédé selon la revendication 1, dans lequel la pluralité d'échantillons de signal est associée à un schéma de modulation et une phase porteuse, la détermination de la phase de bruit à variation rapide comprenant :

> - la sélection de la phase de signal décalée,
> - le calcul de la moyenne de la phase de signal décalée sélectionnée avec les phases de signal décalées d'un nombre $K_2$ d'échantillons de signal intermédiaire précédents successifs et d'un nombre $K_2$ d'échantillons de signal intermédiaire suivants successifs, afin de récupérer la phase de bruit à variation rapide, $K_2$ étant un entier sélectionné.

5. Procédé selon la revendication 3 ou 4, dans lequel le calcul de la moyenne de la phase de signal sélectionnée et/ou de la phase de signal décalée sélectionnée est effectué en appliquant un algorithme d'estimation de phase porteuse.

6. Procédé selon une des revendications 3 à 5, dans lequel le schéma de modulation est une modulation M et la suppression de la phase porteuse comprend l'application d'une puissance M à l'échantillon de signal, M étant un facteur de multiplication de la phase de signal.

7. Procédé selon la revendication 1, comprenant en outre une étape d'application d'une fonction argument à l'échantillon de signal, le décalage de l'échantillon de signal comprenant la multiplication de l'échantillon de signal par la fonction argument inverse appliquée à la phase de bruit à variation lente.

8. Procédé selon la revendication 1, comprenant en outre une étape d'application d'une fonction argument à l'échantillon de signal intermédiaire, le décalage de l'échantillon de signal intermédiaire comprenant la multiplication de l'échantillon de signal intermédiaire par la fonction argument inverse appliquée à la phase de bruit à variation rapide.

9. Procédé selon la revendication 3, dans lequel $K_1$ est un entier fixe compris dans la gamme [7-1000].

10. Procédé selon les revendications 3 et 4, dans lequel le rapport entre $K_2$ et $K_1$ est inférieur à 1/2, de préférence inférieur à 1/10.

11. Procédé selon la revendication 4, dans lequel $K_2$ est sélectionné en mesurant la non-linéarité du canal de transmission optique.

12. Procédé selon la revendication 4, dans lequel $K_2$ est variable et automatiquement ajusté en fonction de l'échantillon de signal intermédiaire sélectionné.

13. Dispositif (1) destiné à corriger le décalage de phase d'un canal de transmission optique, le dispositif comprenant :

> - une entrée (4) pour recevoir une pluralité d'échantillons de signal à des occurrences temporelles successives ; chaque échantillon de signal comprenant une phase de signal, la phase de signal comprenant une phase de données et une phase résiduelle,

> **caractérisé par** un premier filtre (2) configurable pour, pour chaque échantillon de signal successif d'une occurrence temporelle successive :

> > - déterminer une phase de bruit à variation lente, et
> > - décaler l'échantillon de signal par la phase de bruit à variation lente, afin de générer un échantillon de signal intermédiaire ayant une phase de signal décalée,

> un deuxième filtre (3) configurable pour, pour chaque échantillon de signal intermédiaire successif d'une occurrence temporelle successive :

> > - déterminer une phase de bruit à variation rapide, la phase de bruit à variation rapide ayant un temps de variation différent d'un temps de variation de la phase de bruit à variation lente,
> > - décaler l'échantillon de signal intermédiaire par la phase de bruit à variation rapide, afin de générer un échantillon de signal à phase corrigée.

FIG. 1

FIG. 2

FIG. 4

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2337241 A

- EP 2856669 A

### Non-patent literature cited in the description

- Viterbi&Viterbi Nonlinear estimation of PSK-modulated carrier phase with application to burst digital transmission. *IEEE Transactions on Information Theory archive,* July 1983, vol. 29 (4), 543-551